# EUROPEAN PATENT SPECIFICATION

(11) **EP 3 007 092 B1**
(45) Date of publication and mention of the grant of the patent: **04.09.2019**
(21) Application number: 14808237.3
(22) Date of filing: 04.06.2014
(51) Int. Cl.: H04L 29/06, G06F 21/44, H04W 12/06, G06F 21/51, H04W 88/02

(54) **MOBILE DEVICE-BASED AUTHENTICATION METHOD AND AUTHENTICATION APPARATUS**
AUF MOBILGERÄT BASIERENDES AUTHENTIFIZIERUNGSVERFAHREN UND AUTHENTIFIZIERUNGSVORRICHTUNG
PROCÉDÉ D'AUTHENTIFICATION BASÉ SUR UN DISPOSITIF MOBILE, ET APPAREIL D'AUTHENTIFICATION

(30) Priority: 06.06.2013 CN 201310222494
(43) Date of publication of application: 13.04.2016
(73) Proprietor: China Unionpay Co., Ltd, Shanghai 200135 (CN)
(72) Inventor: CHAI, Hongfeng, Shanghai 200135 (CN); LU, Zhijun, Shanghai 200135 (CN); HE, Shuo, Shanghai 200135 (CN); GUO, Wei, Shanghai 200135 (CN); ZHOU, Yu, Shanghai 200135 (CN); CHEN, Chengqian, Shanghai 200135 (CN)
(74) Representative: Berkenbrink, Kai-Oliver
(86) International application number: PCT/CN2014/079162
(87) International publication number: WO 2014/194824

(56) References cited:
- WO-A1-00/72149
- WO-A2-2008/074472
- CN-A- 101 959 193
- CN-A- 102 625 309
- CN-A- 102 792 312
- CN-A- 102 891 843
- JP-A- 2013 085 186
- US-A1- 2007 118 558
- LANDON P COX ET AL: "Pocket Hypervisors: Opportunities and Challenges", MOBILE COMPUTING SYSTEMS AND APPLICATIONS, 2007. HOTMOBILE 2007. EIGHTH IEEE WORKSHOP ON, IEEE, PISCATAWAY, NJ, USA, 1 March 2007 (2007-03-01), pages 46-50, XP031165178, ISBN: 978-0-7695-3001-7

## Description

### FIELD OF THE INVENTION

The invention relates to an authentication method and an authentication apparatus based on mobile device.

### BACKGROUND

Since more and more applications are installed in a mobile device (e.g., cell-phone), how to determine the legitimacy and safety of these applications has received attention. Documents WO 00/72149 A1 and US 2007/0118558 A1 disclose a pre-verification of applications in mobile computing.

In current solutions, typically, a mutual verification is made between one application and another according to a secure protocol defined by the two applications. By doing so, when one application requires to access to a plurality of applications, an one-on-one authentication has to be made for the plurality of applications respectively, thus reducing usage efficiency of the whole application environment. Different applications tend to have different ways of authentication, which requires different authentication codes to be written in individual applications, thus increasing the complexity of use in the whole application environment. Moreover, for the same authentication solution, a repeated authentication code will be caused in different applications, thus reducing efficiency in application development. When an application is newly added, a secure protocol of a corresponding authentication solution has also to be defined, thus increasing complexity of application development.

On the other hand, the prior art cannot conduct an authentication on other secure elements in the mobile device than applications, such as SIM card, smart SD card, etc.

### SUMMARY OF THE INVENTION

The invention is defined in the appended independent claims.

According to an object of the invention, an authentication method based on mobile device is disclosed, comprising the following steps: providing an authentication apparatus in a mobile device; using the authentication apparatus to conduct authentication on an application and/or secure element in the mobile device in a secure operating system of the mobile device.

Preferably, the authentication apparatus conducts authentication on the application and/or secure element according to a specific authentication solution.

Preferably, the authentication apparatus is configured with an authentication list for recording applications and/or secure elements that have successfully passed the authentication so that a mutual authentication between the applications and/or secure elements in the authentication list is not required.

Preferably, the authentication apparatus is also used for conducting an authentication on an authentication aggregation which comprises a plurality of applications; when the authentication aggregation has successfully passed the authentication conducted by the authentication apparatus, the authentication apparatus records the plurality of applications contained in the authentication aggregation in the authentication list.

According to another object of the invention, an authentication apparatus based on mobile device is disclosed, wherein the authentication apparatus is disposed in the mobile device and is used for conducting authentication on an application and/or secure element in the mobile device in a secure operating system of the mobile device.

Preferably, the authentication apparatus conducts authentication on the application and/or secure element according to a specific authentication solution.

Preferably, the authentication apparatus is configured with an authentication list for recording applications and/or secure elements that have successfully passed the authentication so that a mutual authentication between the applications and/or secure elements in the authentication list is not required.

Preferably, the authentication apparatus is also used for conducting an authentication on an authentication aggregation which comprises a plurality of applications; when the authentication aggregation has successfully passed the authentication conducted by the authentication apparatus, the authentication apparatus records the plurality of applications contained in the authentication aggregation in the authentication list.

The invention provides a solution for mutual authentication between a mobile device and a secure element, and avoids a problem that there might be several times of authentication and several authentication solutions for one application.

### BRIEF DESCRIPTION OF THE DRAWINGS

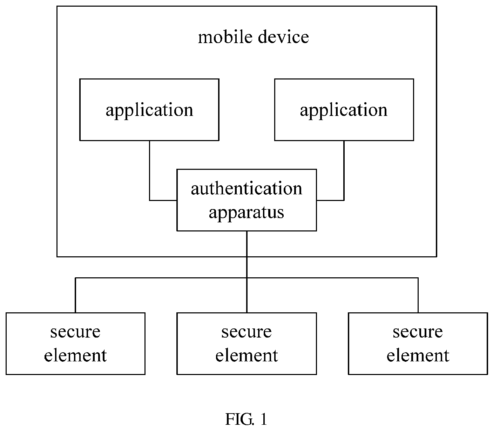

Those skilled in the art will comprehend various aspects of the invention more clearly after reading the specific embodiments of the invention with reference to the accompanying drawings. It will be appreciated by those skilled in the art that the drawings are merely used for explaining the technical solutions of the invention in connection with the specific embodiments, and are not intended to limit the scope of protection of the invention. Fig. 1 is diagram of an authentication apparatus based on mobile device according to an embodiment of the invention.

### DETAILED DESCRIPTION OF THE UTILITY MODEL

Fig. 1 is diagram of an authentication apparatus based on mobile device according to an embodiment of the invention. As shown in Fig. 1, the authentication apparatus is disposed in the mobile device and is used for conducting authentication on an application and/or secure element in the mobile device in a secure operating system of the mobile device so that a mutual authentication between applications, between secure elements or between an application and a secure element is not required.

Typically, a device which is capable of running two operating systems such as a mobile device is in the normal mode, i.e., in the multi-media operating system environment. When performing interaction of security-related information (e.g., entering the password of a bank card), the mobile device will be switched to the secure mode, i.e., to the secure operating system, and a secure program is initiated to perform processing of information. After the processing is completed, the mobile device is switched back to the normal mode so that a secure and reliable environment can be ensured for the user who is entering the password, thus preventing the password from being stolen by malware. The authentication on application and/or secure element by the invention is conducted in a secure operating system so as to prevent information from being stolen and interpolated by malware such as Trojan in the authentication process, thus increasing feasibility and credibility of overall authentication. Herein, the secure element (SE) refers to an independent module having computing and storing functions, in which respective functions are designed so as to protect the safety of the stored data and provide corresponding secure mechanism service for use by external devices. The SE can for example comprise real physical hardware elements such as SIM card, smart SD card or the like, or virtual elements.

In an embodiment, the authentication apparatus conducts authentication on the application and/or secure element according to a specific authentication solution. For example, various different authentication solutions can be stored in the authentication apparatus, and when a new application and/or secure element is added in the mobile device, an authentication solution supported by this application or secure element is chosen for conducting authentication.

In an embodiment, the authentication apparatus is configured with an authentication list for recording applications and/or secure elements that have successfully passed the authentication so that a mutual authentication between the applications and/or secure elements in the authentication list is not required. Therefore, unlike the prior art, in the invention, by introducing the authentication apparatus in the authentication process, the two parties of authentication are set to be an application or secure element and an authentication apparatus to be added in the mobile device, thus improving efficiency in authentication and simplifying process of authentication. For example, an application in a smart card needs to have access to a human-machine interface application and algorithm application in the mobile device. It is required to conduct authentication on the access to the human-machine interface application and algorithm application by the application in the smart SD card. According to the invention, both the functional modules (i.e., the human-machine interface application and the algorithm application) belonging to the mobile device can be recorded in the authentication success list of the authentication apparatus so that the application in the smart SD card does not have to conduct separate authentications on the two functional modules respectively, and only an authentication with the authentication apparatus of the mobile device is required. If the authentication is passed, the application in the smart SD card can have access to the human-machine interface application and the algorithm application. Since the human-machine interface application and the algorithm application in the mobile device trust the authentication apparatus, they will also trust the application in the smart SD card, and the service function thereof is opened.

In an embodiment, the authentication apparatus is also used for conducting an authentication on an authentication aggregation which comprises a plurality of applications; when the authentication aggregation has successfully passed the authentication conducted by the authentication apparatus, the authentication apparatus records the plurality of applications contained in the authentication aggregation in the authentication list. The authentication aggregation is a carrier having a plurality of applications, and the legitimacy of these applications can be ensured through a bidirectional ID authentication between the carrier and the application thereon. These carriers can comprise real hardware elements such as SIM card, smart SD card or the like, and can also comprise an application set composed of applications. For example, the authentication aggregation can be another mobile device comprising a plurality of applications. When the current mobile device needs an application in said another mobile device for interaction, according to the invention, only an authentication on said another mobile device has to be conducted. When the authentication is passed, the current mobile device will acknowledge the legitimacy of the plurality of applications in said another mobile device.

An exemplary authentication process will be described hereinafter according to the above one or more embodiments of the invention.
(1) when the secure element (e.g., smart SD card) is connected to the mobile device, an authentication is conducted between the authentication apparatus and the smart SD card according to an agreed bidirectional authentication solution (e.g., PKI protocol); if the authentication is failed, the authentication apparatus will reject the secure element; and if the authentication is passed, the process proceeds;
(2) the secure element is added to the authentication success list, and an authentication between applications already in the success list and the secure element is not required.

## Claims

1. An authentication method based on mobile device, wherein the mobile device is configured to run a multi-media operating system and a secure operating system, the method comprising the following steps:
providing an authentication apparatus in a mobile device; and
using the authentication apparatus to conduct authentication on an application and/or secure element in the mobile device in a secure operating system of the mobile device,
wherein the authentication apparatus is configured with an authentication list for recording applications and/or secure elements that have successfully passed the authentication so that a mutual authentication between the applications and/or secure elements in the authentication list is not required, and wherein the authentication list is updated in the secure operation system.

2. A method according to claim 1, in that, the authentication apparatus conducts authentication on the application and/or secure element according to a specific authentication solution.

3. A method according to claim 1 in that, the authentication apparatus is also used for conducting an authentication on an authentication aggregation which comprises a plurality of applications; and when the authentication aggregation has successfully passed the authentication conducted by the authentication apparatus, the authentication apparatus records the plurality of applications contained in the authentication aggregation in the authentication list.

4. An authentication apparatus based on mobile device, wherein the mobile device is configured to run a multi-media operating system and a secure operating system, in that, the authentication apparatus is disposed in the mobile device, and
the authentication apparatus is used for conducting authentication on an application and/or secure element in the mobile device in a secure operating system of the mobile device,
wherein the authentication apparatus is configured with an authentication list for recording applications and/or secure elements that have successfully passed the authentication so that a mutual authentication between the application and/or secure elements in the authentication list is not required, and wherein the authentication list is updated in the secure operating system.

5. The authentication apparatus according to claim 4, in that, the authentication apparatus conducts authentication on the application and/or secure element according to a specific authentication solution.

6. The authentication apparatus according to claim 5, in that, the authentication apparatus is also used for conducting an authentication on an authentication aggregation which comprises a plurality of applications; and
when the authentication aggregation has successfully passed the authentication conducted by the authentication apparatus, the authentication apparatus records the plurality of applications contained in the authentication aggregation in the authentication list.

## Patentansprüche

1. Authentifizierungsverfahren auf der Grundlage einer mobilen Vorrichtung, wobei die mobile Vorrichtung zum Ausführen eines Multimedia-Betriebssystems und eines sicheren Betriebssystems ausgelegt ist, wobei das Verfahren die folgenden Schritte umfasst:
Bereitstellen einer Authentifizierungseinrichtung in einer mobilen Vorrichtung; und Verwenden der Authentifizierungseinrichtung zum Durchführen einer Authentifizierung einer Anwendung und/oder eines sicheren Elements der mobilen Vorrichtung in einem sicheren Betriebssystem der mobilen Vorrichtung, wobei die Authentifizierungseinrichtung mit einer Authentifizierungsliste zum Aufführen von Anwendungen und/oder sicheren Elementen ausgelegt ist, die die Authentifizierung erfolgreich bestanden haben, sodass eine gegenseitige Authentifizierung der Anwendungen und/oder der sicheren Elemente auf der Authentifizierungsliste nicht erforderlich ist, und wobei die Authentifizierungsliste im sicheren Betriebssystem aktualisiert wird.

2. Verfahren nach Anspruch 1, wobei die Authentifizierungseinrichtung eine Authentifizierung der Anwendung und/oder des sicheren Elements gemäß einer bestimmten Authentifizierungslösung durchführt.

3. Verfahren nach Anspruch 1, wobei die Authentifizierungseinrichtung zum Durchführen einer Authentifizierung einer Authentifizierungszusammenstellung verwendet wird, die eine Vielzahl von Anwendungen umfasst; und die Authentifizierungseinrichtung die Vielzahl von in der Authentifizierungszusammenstellung enthaltenen Anwendungen in der Authentifizierungsliste aufführt, wenn die Authentifizierungszusammenstellung die von der Authentifizierungseinrichtung durchgeführte Authentifizierung erfolgreich bestanden hat.

4. Authentifizierungseinrichtung auf der Grundlage einer mobilen Vorrichtung, wobei die mobile Vorrichtung zum Ausführen eines Multimedia-Betriebssystems und eines sicheren Betriebssystems ausgelegt, wobei die Authentifizierungseinrichtung in der mobilen Vorrichtung angeordnet ist und die Authentifizierungseinrichtung zum Durchführen einer Authentifizierung einer Anwendung und/oder eines sicheren Elements der mobilen Vorrichtung in einem sicheren Betriebssystem der mobilen Vorrichtung verwendet wird, wobei die Authentifizierungseinrichtung mit einer Authentifizierungsliste zum Aufführen von Anwendungen und/oder sicheren Elementen ausgelegt ist, die die Authentifizierung erfolgreich bestanden haben, sodass eine gegenseitige Authentifizierung der Anwendung und/oder der sicheren Elemente auf der Authentifizierungsliste nicht erforderlich ist, und wobei die Authentifizierungsliste im sicheren Betriebssystem aktualisiert wird.

5. Authentifizierungseinrichtung nach Anspruch 4, wobei die Authentifizierungseinrichtung eine Authentifizierung der Anwendung und/oder des sicheren Elements gemäß einer bestimmten Authentifizierungslösung durchführt.

6. Authentifizierungseinrichtung nach Anspruch 5, wobei die Authentifizierungseinrichtung auch zum Durchführen einer Authentifizierung einer Authentifizierungszusammenstellung verwendet wird, die eine Vielzahl von Anwendungen umfasst; und die Authentifizierungseinrichtung die Vielzahl von in der Authentifizierungszusammenstellung enthaltenen Anwendungen in der Authentifizierungsliste aufführt, wenn die Authentifizierungszusammenstellung die von der Authentifizierungseinrichtung durchgeführte Authentifizierung erfolgreich bestanden hat.

## Revendications

1. Procédé d'authentification basé sur dispositif mobile, le dispositif mobile étant conçu pour faire fonctionner un système d'exploitation multimédia et un système d'exploitation sécurisé, ce procédé comprenant les étapes suivantes :
prévision d'un appareil d'authentification dans un dispositif mobile ; et utilisation de l'appareil d'authentification pour procéder à l'authentification sur une application et/ou un élément sécurisé dans le dispositif mobile dans un système d'exploitation sécurisé du dispositif mobile, l'appareil d'authentification étant conçu avec une liste d'authentification pour enregistrer des applications et/ou sécuriser les éléments qui ont satisfait à l'authentification, de sorte qu'une authentification mutuelle entre les applications et/ou les éléments sécurisés dans la liste d'authentification n'est pas requise, et la liste d'authentification étant mise à jour dans le système d'exploitation sécurisé.

2. Procédé selon la revendication 1, dans lequel l'appareil d'authentification effectue une authentification sur l'application et/ou l'élément sécurisé en fonction d'une solution d'authentification spécifique.

3. Procédé selon la revendication 1, dans lequel l'appareil d'authentification est aussi utilisé pour effectuer une authentification sur un agrégat d'authentification qui comprend une pluralité d'applications insatisfaits a satisfait ; et lorsque l'agrégat d'authentification a satisfait à l'authentification effectuée par l'appareil d'authentification, l'appareil d'authentification enregistre la pluralité d'applications contenues dans l'agrégat d'authentification dans la liste d'authentification.

4. Appareil d'authentification basé sur dispositif mobile, le dispositif mobile étant conçu pour faire fonctionner un système d'exploitation multimédia et un système d'exploitation sécurisé dans lequel l'appareil d'authentification est disposé dans le dispositif mobile, et l'appareil d'authentification est utilisé pour procéder à l'authentification sur une application et/ou un élément sécurisé dans le dispositif mobile dans un système d'exploitation sécurisé du dispositif mobile, l'appareil d'authentification étant conçu avec une liste d'authentification pour enregistrer des applications et/ou sécuriser les éléments qui ont satisfait à l'authentification, de sorte qu'une authentification mutuelle entre les applications et/ou les éléments sécurisés dans la liste d'authentification n'est pas requise, et la liste d'authentification étant mise à jour dans le système d'exploitation sécurisé.

5. Appareil d'authentification selon la revendication 4, l'appareil d'authentification effectuant une authentification sur l'application et/ou l'élément sécurisé en fonction d'une solution d'authentification spécifique.

6. Appareil d'authentification selon la revendication 5, l'appareil d'authentification étant aussi utilisé pour effectuer une authentification sur un agrégat d'authentification qui comprend une pluralité d'applications ; et lorsque l'agrégat d'authentification a satisfait à l'authentification effectuée par l'appareil d'authentification, l'appareil d'authentification enregistre la pluralité d'applications contenues dans l'agrégat d'authentification dans la liste d'authentification.
